(19) Europäisches Patentamt
European Patent Office
Office européen des brevets

(11) **EP 4 571 623 A1**

(12) **EUROPEAN PATENT APPLICATION**

(43) Date of publication:
**18.06.2025 Bulletin 2025/25**

(21) Application number: **24214131.5**

(22) Date of filing: **20.11.2024**

(51) International Patent Classification (IPC):
**G06Q 30/0202** (2023.01)  **G06Q 30/0201** (2023.01)
**G06N 3/08** (2023.01)

(52) Cooperative Patent Classification (CPC):
**G06N 3/08; G06N 3/045; G06N 7/01;
G06Q 30/0202; G06Q 30/0206**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.12.2023 IN 202321085800**

(71) Applicant: **Tata Consultancy Services Limited
Maharashtra (IN)**

(72) Inventors:
• **GUGULOTHU, NARENDHAR**
  **500081 Hyderabad, Telangana (IN)**
• **BHAT, SANJAY PURUSHOTTAM**
  **500081 Hyderabad, Telangana (IN)**
• **BODAS, TEJAS**
  **500032 Hyderabad, Telangana (IN)**

(74) Representative: **Goddar, Heinz J.
Boehmert & Boehmert
Anwaltspartnerschaft mbB
Pettenkoferstrasse 22
80336 München (DE)**

(54) **ESTIMATING WILLINGNESS-TO-PAY DISTRIBUTIONS FROM BUNDLED AND UNBUNDLED SALES DATA USING GAMMA MIXTURE DENSITY NETWORKS**

(57)    The disclosure herein addresses estimating WTP distributions from bundled and unbundled sales data using GMDN model. The input samples are passed through the GMDN model to learn the plurality gamma mixture parameters. The learnt gamma mixture parameters are then used to evaluate the weighted CDF value at the offered price of the bundle and the bundle composition. The weighted CDF value is then used to predict the customer's choice based on the predefined threshold and estimates the revenue optimal price of the bundle composition. The disclosed GMDN model models the WTP distributions as the mixture of gamma distributions and learns the WTP distributions from the bundled and the unbundled sales with greater accuracy and excels in estimating the revenue optimal prices and the revenues of the products and the bundles.

FIG. 2

**Description**

CROSS-REFERENCE TO RELATED APPLICATIONS AND PRIORITY

The present application claims priority to Indian provisional application no. 202321085800, filed on December 15, 2023. The entire contents of the aforementioned application are incorporated herein by reference.

TECHNICAL FIELD

The disclosure herein generally relates to mixture density networks, and, more to particularly, for estimating willingness-to-pay distributions from bundled and unbundled sales data using gamma mixture density networks.

BACKGROUND

Product bundling has a wide range of applications in industries including software (e.g., Microsoft 365), travel and hospitality (e.g., fly-and-stay combos in airlines and travel packages from agencies), restaurants (e.g., McDonald's Happy Meals) and thereof. Companies offer the product bundling for a variety of reasons. Strategically, a company use the product bundling to sell unpopular or low velocity products, to generate more sales, maximize profits, to increase average order value, to promote new and more differentiated products with lower marketing costs, to cut down on the decisions customers need to make, and to reduce wastage in inventory.

Despite the benefits of the product bundling, the availability of bundled sales data is limited making actionable insights difficult to obtain. To learn about customer's choice of buy and no-buy decisions, and to take meaningful actions, historical data comprising profusely available unbundled product-level sales data along with limited bundled sales data is to be used. Further, prediction of the customer's choice on a new bundled offer necessitates estimating willingness-to-pay (WTP) distributions of individual products from the historical data. However, this becomes particularly challenging when the historical data contains bundled offers as the observed buy and no-buy decisions are determined by the aggregated effect of the individual WTPs while predictions require the disaggregated WTP distributions of the individual products.

SUMMARY

Embodiments of the present disclosure present technological improvements as solutions to one or more of the above-mentioned technical problems recognized by the inventors in conventional systems. For example, in one embodiment, a method for estimating willingness-to-pay distributions from bundled and unbundled sales data using gamma mixture density networks is provided. The method includes receiving a historical sales dataset comprising a plurality of input samples pertaining to a bundle. The bundle comprises one or more products. Further, the method includes training a Gamma Mixture Density Network (GMDN) model with each of the plurality of input samples in the historical sales data set by: feeding a feature vector of each of the one or more products of the bundle in the input sample, to a corresponding feed forward layer of the GMDN model to generate an intermediate representation for each of the one or more products; passing the intermediate representation of each of the one or more products to a subsequent GMDN layer of the GMDN model, to learn a gamma mixture comprising a plurality of gamma mixture parameters for each of the one or more products; obtaining a willingness-to-pay (WTP) distribution corresponding to each of the product of the one or more products from the obtained gamma mixture of the corresponding product; estimating a bundle WTP distribution composed of the one or more products by convolving WTP distributions of the one or more products based on a bundle composition; calculating a weighted Cumulative Density Function (CDF) value, using (i) the bundle WTP distribution, and (ii) an offered price of the bundle composition; predicting a class score of the bundle composition using the weighted CDF value; computing a loss function using the predicted class score and an annotated binary customer's choice; and updating the GMDN model based on the computed loss function to generate a trained GMDN model.

In another aspect, a system for estimating willingness-to-pay distributions from bundled and unbundled sales data using gamma mixture density networks is provided. The system comprising: a memory storing instructions; one or more communication interfaces; and one or more hardware processors coupled to the memory via the one or more communication interfaces, wherein the one or more hardware processors are configured by the instructions to: receive a historical sales dataset comprising a plurality of input samples pertaining to a bundle, wherein the bundle comprises one or more products; train a Gamma Mixture Density Network (GMDN) model with each of the plurality of input samples in the historical sales data set by: feed a feature vector of each of the one or more products of the bundle in the input sample, to a corresponding feed forward layer of the GMDN model to generate an intermediate representation for each of the one or more products; pass the intermediate representation of each of the one or more products to a subsequent GMDN layer of the GMDN model, to learn a gamma mixture comprising a plurality of gamma mixture parameters for each of the one or more products; obtain a willingness-to-pay (WTP) distribution corresponding to each of the product of the one or more products from the obtained gamma mixture of the corresponding product; estimate a bundle WTP distribution composed of the one or more products by convolving WTP distributions of the one or more products based on a bundle composition; calculate a weighted Cumulative Density Function (CDF) value, using (i) the bundle WTP distribution, and (ii) an offered price of the bundle composition; predict a class score of the bundle composition using the weighted CDF value; compute a loss function using the predicted class score and an annotated binary customer's choice; and update the GMDN model based on the computed loss function to generate a trained GMDN model.

In yet another aspect, there are provided one or more non-transitory machine-readable information storage mediums comprising one or more instructions which when executed by one or more hardware processors cause a method for estimating willingness-to-pay distributions from bundled and unbundled sales data using gamma mixture density networks is provided. The method includes receiving a historical sales dataset comprising a plurality of input samples pertaining to a bundle. The bundle comprises one or more products. Further, the method includes training a Gamma Mixture Density Network (GMDN) model with each of the plurality of input samples in the historical sales data set by: feeding a feature vector of each of the one or more products of the bundle in the input sample, to a corresponding feed forward layer of the GMDN model to generate an intermediate representation for each of the one or more products; passing the intermediate representation of each of the one or more products to a subsequent GMDN layer of the GMDN model, to learn a gamma mixture comprising a plurality of gamma mixture parameters for each of the one or more products; obtaining a willingness-to-pay (WTP) distribution corresponding to each of the product of the one or more products from the obtained gamma mixture of the corresponding product; estimating a bundle WTP distribution composed of the one or more products by convolving WTP distributions of the one or more products based on a bundle composition; calculating a weighted Cumulative Density Function (CDF) value, using (i) the bundle WTP distribution, and (ii) an offered price of the bundle composition; predicting a class score of the bundle composition using the weighted CDF value; computing a loss function using the predicted class score and an annotated binary customer's choice; and updating the GMDN model based on the computed loss function to generate a trained GMDN model.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary system for estimating willingness-to-pay distributions from bundled and unbundled sales data using gamma mixture density networks, in accordance with some embodiments of the present disclosure.
FIG. 2 depicts an architecture diagram for estimating the willingness-to-pay distributions from the bundled and the unbundled sales data using the gamma mixture density networks, using the system of FIG. 1, according to some embodiments of the present disclosure.
FIGS. 3A, and 3B depict a flow diagram for estimating the willingness-to-pay distributions from the bundled and the unbundled sales data using the gamma mixture density networks, using the system of FIG. 1, according to some embodiments of the present disclosure.
FIGS. 4A, 4B, and 4C depict curves of an offered price versus purchase probability for product-1, product-2, and product-3 respectively, according to some embodiments of the present disclosure.
FIGS. 5A, 5B, 5C, and 5D depict curves of the offered price versus the purchase probability for bundle composed of product-1 and product-2, bundle composed of product-2 and product-3, bundle composed of product-1 and product-3, and bundle composed of product-1, product-2, and product-3 respectively, according to some embodiments of the present disclosure.
FIGS. 6A, 6B, and 6C depict curves of the offered price versus revenue for product-1, product-2, and product-3 respectively, according to some embodiments of the present disclosure.
FIGS. 7A, 7B, 7C, and 7D depict curves of the offered price versus the revenue for bundle composed of product-1 and product-2, bundle composed of product-2 and product-3, bundle composed of product-1 and product-3, and bundle composed of product-1, product-2, and product-3 respectively, according to some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following embodiments described herein.

Product bundling is a commonly used marketing strategy for increasing sales and revenue in both offline retail and online e-commerce. It involves grouping multiple products together and selling them as a single unit for a single price. This strategy is used by companies to sell unpopular or low velocity products, to generate more sales and maximize profits, to increase average order value, to promote new and more differentiated products with lower marketing costs, to cut down on the decisions customers need to make, and to reduce wastage in inventory. However, the availability of bundled sales data is limited for the companies to take the product bundling decisions. Hence to make the product bundling decisions, the companies can use only available unbundled product-level sales data along with the limited bundled sales data. This gives rise to the need for an approach which leverages both bundled and unbundled sales data. Moreover, the approach should be able to estimate willingness-to-pay (WTP) distributions, purchase probabilities and revenue-optimal prices of products and bundles from historical buy and no-buy sales data.

Accurately estimating WTP distributions is central to any pricing decision. The existing direct and indirect approaches to estimate WTP distributions based on surveys ("Hultstr¨om, W.; and Bj¨o¨orn, A. 2022. Comfort and Security, But at What Cost?: A Study Using a Metric-Based Conjoint Analysis to Estimate the Willingness to Pay for Bundled Smart Home Technology.") provide a point estimate rather than an estimate of the distribution. In contingent valuation, the direct approach in literature, the respondents are asked directly for their maximum WTP for the product. However, the respondents may cut down their WTP to keep the prices low or may overstate their WTP out of a sense of prestige leading to a bias in estimating the WTP distributions. Although there are ways to tackle bias, indirect approaches are found to be more realistic and accurate. In conjoint analysis (CA), a popular indirect approach, the respondents are asked to rank or choose the preferred product or bundles based on attributes and price. Still, the CA approach is also not based on real transactions and estimating the WTP distributions are influenced by the defined attributes, unrealistic prices and the discerning ability of the respondents. In existing work of WTP estimation using regression analysis ("Donaldson, C.; Jones, A. M.; Mapp, T. J.; and Olson, J. A. 1998. Limited dependent variables in willingness to pay studies: applications in health care. Applied Economics, 30(5): 667-677."), price elasticity and demand ("Galarraga, I.; Gonz'alez-Eguino, M.; and Markandya, A. 2011. Willingness to pay and price elasticities of demand for energy-efficient appliances: Combining the hedonic approach and demand systems. Energy Economics, 33: S66-S74."), the estimates are points rather than distributions.

Further, in a discrete choice modelling a customer's choice for the bundle is modelled using the multinomial logit (MNL) model ("Hensher, D. A.; and Johnson, L. W. 2018". Applied discrete choice modelling. Routledge"). A drawback with such models is that the WTP is captured by distributions such as Gumbel, exponential or generalized extreme value, so that the problem is amenable to analysis. However, there is no evidence to suggest that the WTP distribution should be restricted to such distributions and, in fact, must be learnt from the underlying data.

Pricing is an integral part of the product bundling and influences revenue, profit, market positioning and competitiveness of a firm. Existing work in literature ("Adams, W. J.; and Yellen, J. L. 1976. Commodity bundling and the burden of monopoly. The quarterly journal of economics, 475-498.") considered commodity bundling and assumed that valuation of individual products is known. Then the strategy of bundling boils down to finding nice partitions of the multi-product price space to maximize the benefits of the product bundling. One of the earliest works to use MNL choice probability model for bundle assortment and pricing is ("Bitran, G. R.; and Ferrer, J.-C. 2007. On pricing and composition of bundles. Production and Operations Management, 16(1): 93-108"). Having modeled the choice probabilities, the optimal pricing problem is solved as a non-linear mixed integer program. Further, in existing works, prediction of the customer's choice on a new bundled offer necessitates estimating the WTP distributions of individual products from the historical dataset. However, this becomes particularly challenging when the historical dataset contains bundled offers as the observed buy and no-buy decisions are determined by the aggregated effect of the individual WTPs, while predictions require the disaggregated WTP distributions of the individual products. Further, existing works are using Mixture Density Networks for the product bundling classification tasks of only unbundled (product level) sales, and they need a separate classification model to be trained for each of the product to estimate the WTP distributions.

Embodiments herein provide a method and system for estimating willingness-to-pay distributions and revenue optimal price from the bundled and unbundled sales data using gamma mixture density networks (GMDNs). Each customer possesses WTP for every product in a product universe and accepts to buy the given bundle at an offered price if and only if the sum of the customers WTP for all the products in the offered bundle is greater than the offered price. Predicting the customer's choice for new bundled offers necessitates estimating the WTP distributions of individual products from historical sales dataset. However, estimating the WTP distributions of the individual products from the historical sales dataset is particularly challenging when dealing with the bundled offers. The disclosed method leverages GMDNs, a neural network architecture treating the WTP distributions learning as a binary classification approach. The disclosed neural network architecture models the individual WTP distributions as mixtures of gamma distributions and utilizes GMDNs to estimate a plurality gamma mixture parameters and learn individual product WTP distributions from the historical sales dataset comprising of bundled and unbundled sales data.

The binary classification approach takes in historical bundled sales data and unbundled sales data and learns to predict the purchase probability by estimating the WTP distributions with the help of GMDNs. The predicted purchase probability is then used to estimate the revenue optimal price by running a revenue maximization algorithm. The customer's choice is a binary choice between buying the bundle or not.

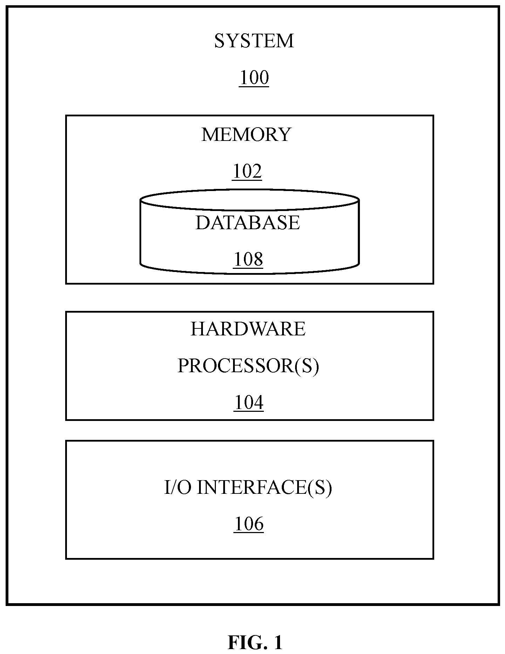

Referring now to the drawings, and more particularly to FIG. 1 through FIG. 7D, where similar reference characters denote corresponding features consistently throughout the figures, there are shown preferred embodiments, and these embodiments are described in the context of the following exemplary system and/or method.

FIG. 1 is a functional block diagram of a system 100 for estimating the WTP distributions from the bundled and the unbundled sales data using the GMDNs, in accordance with some embodiments of the present disclosure. In an embodiment, the system 100 includes one or more hardware processors 104, communication interface device(s) or input/output (I/O) interface(s) 106 (also referred as interface(s)), and one or more data storage devices or memory 102 operatively coupled to the one or more hardware processors 104. The one or more processors 104 may be one or more software processing components and/or hardware processors.

Referring to the components of the system 100, in an embodiment, the processor (s) 104 can be the one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the processor(s) 104 is/are configured to fetch and execute computer-readable instructions stored in the memory. In an embodiment, the system 100 can be implemented in a variety of computing systems, such as laptop computers, notebooks, hand-held devices (e.g., smartphones, tablet phones, mobile communication devices, and the like), workstations, mainframe computers, servers, a network cloud, and the like.

The I/O interface(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface (s) 106 can include one or more ports for connecting a number of devices to one another or to another server.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. Thus, the memory 102 may comprise information pertaining to input(s)/output(s) of each step performed by the processor(s) 104 of the system 100 and methods of the present disclosure. In an embodiment, a database 108 is comprised in the memory 102, wherein the database 108 comprises information on a historical sales dataset comprising input samples pertaining to a bundle, and a predefined threshold. The memory 102 further comprises a plurality of modules (not shown for various technique(s) such as revenue maximization algorithm, Adam optimizer and the like. The above-mentioned technique(s) are implemented as at least one of a logically self-contained part of a software program, a self-contained hardware component, and/or, a self-contained hardware component with a logically self-contained part of a software program embedded into each of the hardware component (e.g., hardware processor 104 or memory 102) that when executed perform the method described herein. The memory 102 further comprises (or may further comprise) information pertaining to input(s)/output(s) of each step performed by the systems and methods of the present disclosure. In other words, input(s) fed at each step and output(s) generated at each step are comprised in the memory 102 and can be utilized in further processing and analysis.

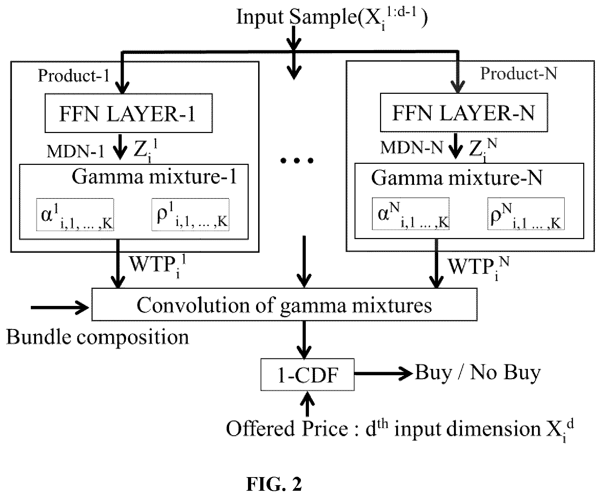

FIG. 2 depicts an architecture diagram for estimating the willingness-to-pay distributions from the bundled and the unbundled sales data using the gamma mixture density networks, using the system of FIG. 1, according to some embodiments of the present disclosure. The input sample comprising of one or more products of the bundle is passed to a feed forward layer of a GMDN model to generate corresponding intermediate representation of the input sample. The intermediate representation of each of the one or more products are passed to a subsequent GMDN layer of the GMDN model, to learn the gamma mixture comprising a plurality of gamma mixture parameters, for each of the one or more products. Further, the WTP distribution for each of the products is obtained from the obtained gamma mixture. A bundle WTP distribution composed of the one or more products is estimated by convolving the WTP distributions of the one or more products based on a bundle composition. Further, a weighted Cumulative Density Function (CDF) value is calculated, using the bundle WTP distribution, and the offered price of the bundle composition. The complementary weighted CDF (1-wCDF) value is used to predict the customer's choice based on a predefined threshold and estimates a revenue optimal price of the bundle composition. The 1-wCDF value is also referred to as purchase probability. The predefined threshold is defined as 0.5, according to some embodiments of the present disclosure.

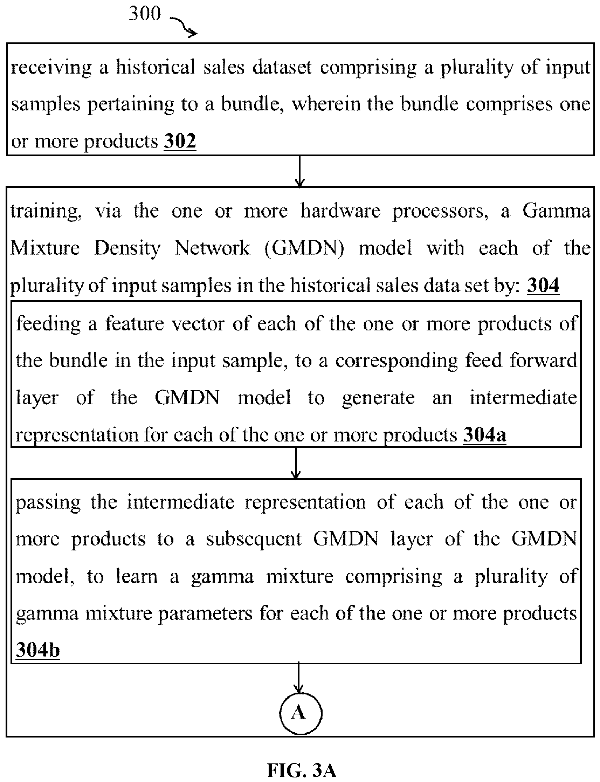

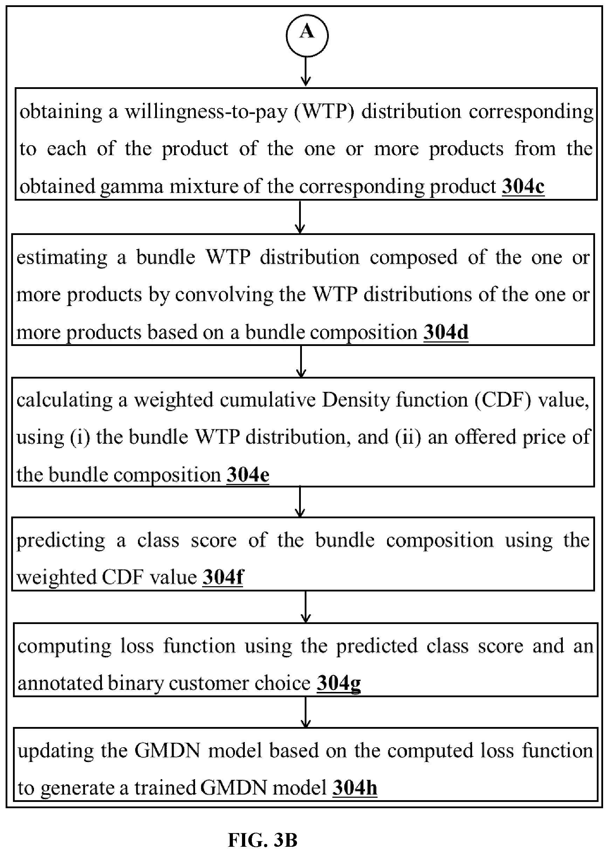

FIGS. 3A and 3B is a flow diagram for estimating the willingness-to-pay distributions from the bundled and the unbundled sales data using the gamma mixture density networks, using the system of FIG. 1, according to some embodiments of the present disclosure.

In an embodiment, the system 100 comprises one or more data storage devices or the memory 102 operatively coupled to the processor(s) 104 and is configured to store instructions for execution of steps of the method 300 by the processor(s) 104. The steps of the method 300 of the present disclosure will now be explained with reference to the components or blocks of the system 100 as depicted in FIG. 1, the architecture diagram depicted in FIG. 2, and the steps of flow diagram as depicted in FIGS. 3A and 3B. Although process steps, method steps, techniques or the like may be described in a sequential order, such processes, methods and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

Referring to steps of FIG. 3A, at step 302 of the method 300, via one or more hardware processors receive, the historical sales dataset comprising the plurality of input samples pertaining to the bundle, wherein the bundle comprises one or more products. The plurality of input samples comprises a plurality of bundled samples, and a plurality of unbundled samples. Each of the plurality of bundled samples are composed of two or more products, and the plurality of unbundled samples corresponds to a single product. Further, each of the plurality of input samples comprises (i) the bundle composition, (ii) feature vectors of the bundle, (iii) the offered price of the bundle composition, and (iv) an annotated binary customer's choice corresponding to the bundled composition. The bundle composition is a binary vector representing one or more products offered in the bundle.

At step 304 of the method 300, the one or more hardware processors train, the GMDN model with each of the plurality of input samples in the historical sales data set. In an embodiment, training the GMDN model with each of the input sample is explained through steps 304a to 304h. At step 304a, the feature vector of each of the one or more products of the bundle in the input sample is fed to the corresponding feed forward layer of the GMDN model to generate the intermediate representation for each of the one or more products.

For a given a positive integer k, a set is denoted as {1, ..., k} by [k] and the set of all nonempty subsets of k by $B_k$. For each $B \in B_k$, $1_B \in \{0,1\}$ k is the indicator vector of B having its *ith* element as 1 if and only if $i \in B$. The convolution of two CDFs F1 and F2 are denoted by F1 * F2.

Consider an online retailer selling N products either individually or as bundles. The set of bundles is naturally identified with $B_N$. Every customer who visits the retailer's portal is offered the bundle at the offered price possibly chosen according to the bundle composition and features of the customer and/or the session. The customer may choose to accept or reject the offer. The retailer has access to the historical sales dataset $D = \{(b_j, x_j, p_j, y_j) : j \in [S]\}$ consisting of S historical samples of successful and unsuccessful offers, where $b_j \in B_N$, $x_j, p_j \geq 0$ and $y_j \in \{0,1\}$ denote the bundle composition, the feature vector, the offered price and the customer's choice, respectively, observed on the *jth* historical offer, with $y_j = 1$ representing the successful offer. The retailer would like to use the historical sales dataset D to estimate the revenue optimal price for each of the bundle such that the expected revenue from offering that bundle at that revenue optimal price is a maximum.

The input sample $x_j$ of dimension d is first passed through the feed-forward layer of the product $n \in 1, \cdots, N\}$ with r units. The output of the feedforward layer for input $x_j$ is given by:

$$z_j^n = Tanh(W_f^n \cdot x_j^T + b_f^n) \qquad (1)$$

where Tanh denotes hyperbolic tangent activation, T denotes transpose operation, and $W_f^n$ is the r × d dimensional weight matrix and $b_f^n$ is the bias vector of the feed-forward layer of the product n.

At step 304b, the intermediate representation of each of the one or more products is passed to a subsequent GMDN layer of the GMDN model, to learn the gamma mixture comprising the plurality of gamma mixture parameters for each of the one or more products. The intermediate representation $z_j^n$ is then fed to the subsequent GMDN model layers to learn the Gamma mixture parameters for N products as depicted in FIG. 2, according to some embodiments of the present disclosure. Thus, each of the input sample is associated with its own N mixtures of gamma distributions.

At step 304c, obtains the WTP distribution corresponding to each of the product of the one or more products from the obtained gamma mixture of the corresponding product. The parameters of the Gamma mixture for the product n ∈ {1, \cdots, N} with K components are obtained as:

$$\rho_{1,j}^n, \cdots, \rho_{K,j}^n = softmax(W_\rho^n \cdot z_j^{nT} + b_\rho^n)$$

$$\alpha_{1,j}^n, \cdots, \alpha_{K,j}^n = softplus(W_\alpha^n \cdot z_j^{nT} + b_\alpha^n) \qquad (2)$$

Where $W_\rho^n,\ W_\alpha^n,\ b_\rho^n,\ b_\alpha^n$ represent the learnable parameters of the GMDN layer with $\rho_{1,j}^n$ and $\alpha_{1,j}^n$ denoting the mixture weight and shape parameter of the $k^{th}$ gamma component for the nth product of the $j^{th}$ sample, respectively. The softplus activation ensures that the shape parameter $\alpha$ is positive and softmax ensures that the coefficients sum to 1.

Let the learnt gamma mixture for $mt$h product of the product is represented as:

$$g^m(p) = \sum_{k=1}^{K} \rho_k^m \gamma(p;\ \alpha_k^m,\ \beta) \qquad (3)$$

The WTP distribution of the product is modeled as a random variable and train the GMDN model in such a way that it estimates the plurality of gamma mixture parameters of the WTP distribution of the products while learning to classify the input sample as a buy or no-buy sample. It is natural to take the WTP as being nonnegative in value. Hence, it makes sense to consider the WTP distributions which are supported on the non-negative real axis for representing the WTP as the random variable. It is also found that the customers often associate price with quality, and hence they might not be willing to buy the product which is priced much lower than what they perceive the product to cost. To model the customer's choice, it makes sense to choose the WTP distributions with a positive mode. To predict the bundle WTP distribution, it is assumed that the WTP distribution for any given bundle is the sum of the WTP distributions for each of the products contained in that bundle. This opens the possibility of using the learnt product level WTP distributions to construct the bundle WTP distribution for any specified bundle. The key to doing this tractably is to use a parameterized family of distributions which is rich enough to closely approximate arbitrary WTP distributions. Further, the family should be such that the parameters of the WTP distributions of the bundle should be easily computable from the parameters of the WTP distributions of the products constituting that bundle. The parametrized family of distributions should be closed under convolutions and dense in the space of continuous distributions. The family of mixtures of gamma distributions possesses all the desired features mentioned above. Hence gamma-mixture-density-networks-based binary classification (MDNC-gamma) model referred as the GMDN model is used which estimates the plurality of gamma mixture parameters of a mixture of gamma distributions to model the WTP distribution at product-level.

Now suppose that the $jth$ input sample corresponds to the bundle b which is composed of the products m and n with the following WTP distributions respectively.

$$g^m(p) = \sum_{u=1}^{K} \rho_u^m \gamma(p;\ \alpha_u^m,\ \beta)$$

$$g^n(p) = \sum_{v=1}^{K} \rho_v^n \gamma(p;\ \alpha_v^n,\ \beta) \qquad (4)$$

The WTP distributions of the customer for the bundle of products is the sum of the WTP distributions for all the products included in that bundle. The customer accepts an offer on the bundle if and only if the WTP distributions for the bundle is not less than the offered price. The WTP distribution of the customer drawn at random for the product is denoted $as\ j \in$ [N] by the random variable $R_j$. The WTP distribution of the customer for the bundle b $\in B_N$ is then given by the random variable $R_b = 1_b^T R$, where R is the N-dimensional vector having $R_j$ as it's $jth$ element.

Each of the random variables $R_j$, $j \in [N]$, has a probability density. The random variables $R_j$, $j \in$ [N], are mutually independent. The assumption of independence is reasonable in the case where no two products are substitutes or complements of each other. For each $n \in$ [N], $G^n$ and g$^n$ denote the CDF and PDF, respectively, of the random variable $R_n$. It follows from our assumption of independence that, given the bundle b $\in B_N$, the CDF and PDF of $R_b$, denoted $G^b$ and $g^b$ respectively, are the convolutions of the CDFs $\{G^n : n \in$ b$\}$ and the PDFs $\{g^n : n \in$ b$\}$, respectively.

At step 304d, the bundle WTP distribution composed of the one or more products is estimated by convolving the WTP distributions of the one or more products based on the bundle composition. The WTP distribution of the bundle can be estimated by convolving the WTP distributions of the products present in the bundle. The bundle WTP $g^b(p)$) can be obtained as the convolution $g^b(\cdot) = (g^m * g^n)(\cdot)$. This convolution is particularly straightforward since $\beta$ is a constant and is given by:

$$g^b(p) = \sum_{u=1}^{K} \rho_u^m \gamma(p;\ \alpha_u^m,\ \beta) * \sum_{v=1}^{K} \rho_v^n \gamma(p;\ \alpha_v^n,\ \beta)$$

$$= \sum_{u=1}^{K} \sum_{v=1}^{K} \rho_u^m \rho_v^n \gamma\ (p;\ \alpha_u^m\ +\ \alpha_v^n, \beta) \qquad (5)$$

In equation (5) it is noticed that exponentially growing mixture components in the WTP distribution of the bundles after the convolution. Consider the input sample which corresponds to the bundle composed of N products. The input sample will give rise to $K^N$ mixture components in the estimated WTP distribution of the bundle and will require evaluations of the $K^N$ component gamma distributions to get the final prediction of the buy or the no-buy decisions. The evaluation of *the* $K^N$ gamma distributions is a computationally expensive operation which increases the training time of the model with increasing K. However, out of these $K^N$ components, only a few useful components will have high mixture coefficient value while the others will have near-zero mixture coefficients. The first %c mixture components are discarded based on the coefficient values sorted in ascending order. The coefficients of the resulting mixture distribution with $\hat{K}$ components are normalized to sum to one to obtain a mixture with K ($< K^N$) components. This reduces the components for evaluations of the CDF value and thus speeds up the training process.

The resulting mixture distribution $g^b(p)$ has $K^2$ components. If the bundle is composed of $l$ products, then the resulting WTP distribution for the bundle will have $l$ convolution operations and $K^l$ components where $l = \{1,2,\cdots, IV\}$. If $l = 1$ then the bundle is nothing but a pure product. The outputs of the convolution as formulated in equation (5) model the conditional distribution of the binary class label y by leveraging the mixture of Gamma distributions.

GMDNs provide the basis for a popular machine learning technique used to learn the distribution parameters addressed in literature ("Bishop, C. M. 1994. Mixture density networks."). The input samples are passed through the GMDN model to learn the plurality of gamma mixture parameters. The learnt gamma mixture parameters of the WTP distributions are then used to evaluate the CDF value at the offered price of the bundle or the product. The evaluated CDF values are then used to predict class scores. The GMDN model is trained in an end-to-end manner by calculating the binary cross-entropy loss between the class labels and the predicted class scores. Furthermore, the predicted class score is used to calculate revenue and to estimate the revenue optimal price for the given input sample.

At step 304e, the weighted CDF value is calculated, using (i) the bundle WTP distribution, and (ii) the offered price of the bundle composition. The weighted cumulative distribution function value is then evaluated using a bundle WTP distribution parameter with the price $p_j$ and each of the mixture component as the following:

$$G_w^{b,j} = \sum_{k=1}^{K^l} \rho k \cdot G^{b,j}\big(p_j \; ; \; \alpha_k, \beta\big) \qquad (6)$$

Where $G^{b,j}$ is the standard gamma CDF and $G_w^{b,j}$ is the weighted CDF value of the j th input sample for the bundle b evaluated at price $p_j$.

At step 304f, the class score of the bundle composition is predicted using the weighted CDF value. The weighted CDF value $G_w^{b,j}$ is used to get the class score as $\hat{y} = 1 - G_w^{b,j}$.

At step 304g, a loss function is computed using the predicted class score and the annotated binary customer's choice. A value of the annotated binary customer's choice is classified as one of (i) the buy decision representing the successful offer accepted by the customer, and (ii) the no-buy decision representing an unsuccessful offer not accepted by the customer.

At step 304h, the GMDN model is updated based on the computed loss function to generate a trained GMDN model. The MDNC gamma model parameters are learnt by optimizing the binary cross-entropy loss between the ground truth class labels (also referred to as the annotated binary customer's choices) and the predicted class scores given by:

$$L_{BCE} = -\frac{1}{T}\sum_{j=1}^{T} y_j \; log\hat{y}_j + \big(1 - y_j\big)log\big(1 - \hat{y}_j\big) \qquad (7)$$

Where $j$ denotes the *jth* input sample and $T$ is the total number of samples in the historical sales dataset.

Consider the bundle b $\in B_N$ offered at the offered price p > 0. The expected revenue from the offered price is easily seen to be given by $pP(R_b > p) = p(1- G^b(p))$. The optimal revenue price for the bundle b is thus given by $argmax_p$ $p[1 - G^b(p)]$. Thus, the retailer's problem is approximately solved by an algorithm that provides an estimate of $G^b$ for every b. Since the historical sales dataset D may or may not contain samples for every bundle, it is reasonable to expect that such an algorithm will need to estimate $Gj$ for every j E [N] using the historical sales dataset D. Note that if all the input samples in D involved only unbundled offers, then the CDFs $Gj, j \in$ [N], could be estimated by training a suitable binary classifier for each $j$ E [N]. The challenge in setting stems from the possibility that the input samples in D contain offers on multiple bundles as well as the individual products. An additional challenge arises from the need to perform convolutions of the estimated CDFs of the product WTPs to estimate the WTP distribution of the bundle.

The revenue optimal price of the bundle composition is estimated using the predicted class score. The revenue optimal price $p^*$ for the bundle associated with the input sample x is obtained by solving the following maximization problem.

$$p^* = \arg\max_{0 \le p \le p_{max}} p \cdot \hat{y} \qquad (8)$$

Where y the output of the GMDN model for the input sample x. The maximization problem is solved using dual annealing, a stochastic global optimization algorithm. The trained GMDN model, during inferencing stage, predicts binary customer's choice based on the predefined threshold, and estimates the revenue optimal price of the bundle composition.

**Experimental Evaluation**

The system 100 and method of the present disclosure are evaluated with ground truth WTP distributions, revenue-optimal prices, and revenues. Standard classification metrics such as accuracy, F1-score and AUROC are used to evaluate classification performance of the disclosed GMDN model. To evaluate estimated mean of the WTP distribution squared error is used, and percent error is used for estimating the revenue-optimal price.

**Bundle Sales Dataset Generation**

In the experimental evaluation of the present disclosure, considers three products $i_1$, $i_2$, and $i_3$ and denote the corresponding WTP random variable by $R_1$, $R_2$ and $R_3$ respectively. The WTP random variable follow exponential distribution with rates $\lambda_1 = 0.03$, $\lambda_2 = 0.02$ and $\lambda_3 = 0.015$ for products $i_1$, $i_2$, and i3respectively. Then the true purchase probability $V_1(p) := P(R_1 \ge p)$ for the product $i_1$ is equal to $\exp(-\lambda_1 \cdot p)$. Similarly, for the products $i_2$, and $i_3$, the purchase probability is given by: $V_2(p) := P(R_2 \ge p)$ and $V_3(p) := P(R_3 \ge p)$. It is assumed that the bundle WTP variable $R_b$ is an addition of the WTP variables of the products present in the bundle. Suppose that the bundle b is composed of all three products then the WTP random variable of the bundle *is* $R_b = R_1 + R_2 + R_3$. The customer will purchase the bundle b if and only if the WTP distribution is greater than or equal to the offered price of the bundle.

In the system 100 and the method of the present disclosure, three bundles composed of any two of the three products are considered. The offered price for the bundles was in the range of 0-400 with 300 price points of the offered price per bundle. Each bundle is offered to a sample size of 20 at a price point and their buy and no-buy decision is recorded. The resulting dataset has 18,000 data points with the attributes, bundle price, bundle composition, and an indicator variable indicating whether the bundle was purchased or not at the offered price.

**Training Details**

The dataset is divided into train, validation, and test sets. Min-max normalization is used to normalize train, validation, and test sets by obtaining train set statistics. Each experiment is run for five seeds and reported the mean and standard deviation (in parenthesis) numbers as depicted in Tables. 2A, 3A, 4A, 5A, 7, 8A, 9A, and 10A. The optimal neural network is selected as the one with the least cross-entropy loss on the hold-out validation set via grid search on the number of units in the feed-forward layer $r \in \{25, ..., 200\}$. A dropout rate of 0.3 is used for regularization and the Adam optimizer with a learning rate of 0.005.

The revenue-optimal price is obtained by running dual annealing algorithm on the maximization problem. The maximum number of global search iterations are 1e3 and the number of function calls set to 1e10 with the bounds of (0, 400) on the price in dual annealing. The experiments are an on a 64 bit laptop with 8 cores of Intel i7 processor and 16GB RAM using Python 3.10.11, Tensorflow 2.12.0, Numpy 1.23.5, Scipy 1.10.1 and Scikitleam 1.2.2 in implementations.

**Results and Observations**

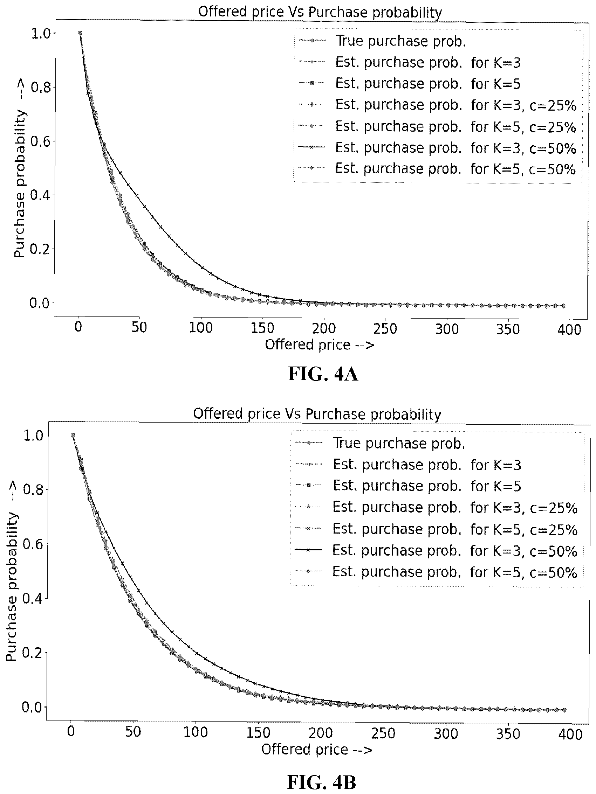

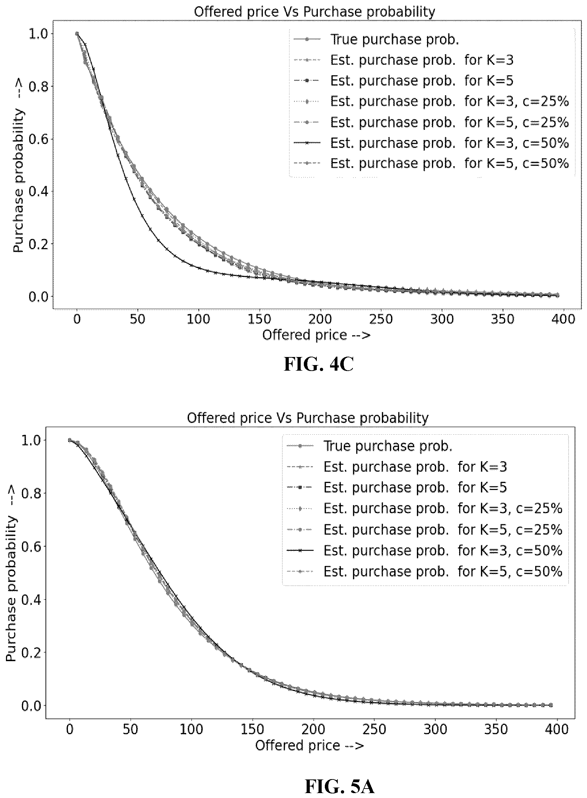

The performance of the disclosed GMDN model is summarized in Tables. 1, 2A, 2B, 3A, 3B, 4A, 4B, 5A, 5B, 6A, and 6B. The estimated purchase probability and revenue curves are plotted in FIGS. 4A, 4B, and 4C depict curves of the offered price versus the purchase probability for product-1, product-2, and product-3 respectively, according to some embodiments of the present disclosure.

Table. 1 depicts performance of the disclosed GMDN model.

Table. 1

| Mixtures K | c | Accuracy | Precision | Recall | F1-score | AUROC |
|---|---|---|---|---|---|---|
| 3 | - | 0.8701 (0.0014) | 0.8656 (0.0011) | 0.8701 (0.0014) | 0.8663 (0.0007) | 0.9142 (0.0001) |
| | 25% | 0.8697 (0.0012) | 0.8653 (0.0009) | 0.8697 (0.0012) | 0.8661 (0.0006) | 0.9142 (0.0001) |
| | 50% | 0.8712 (0.0013) | 0.8665 (0.0012) | 0.8712 (0.0013) | 0.8667 (0.001) | 0.9142 (0.0001) |

(continued)

| Mixtures K | c | Accuracy | Precision | Recall | F1-score | AUROC |
|---|---|---|---|---|---|---|
| 5 | - | 0.8705 (0.0013) | 0.8659 (0.0012) | 0.8705 (0.0013) | 0.8664 (0.0007) | 0.9143 (0.0001) |
| | 25% | 0.8703 (0.0014) | 0.8657 (0.0012) | 0.8703 (0.0014) | 0.8663 (0.0008) | 0.9142 (0) |
| | 50% | 0.87 (0.0014) | 0.8655 (0.0013) | 0.87 (0.0014) | 0.8661 (0.0009) | 0.9142 (0.0001) |

Tables. 2A and 2B represent estimated means of the WTP distributions and the squared error between true means and the estimated means.

Table. 2A

| Bundle type | True mean | Estimated mean of the WTP dist. | | | | | |
|---|---|---|---|---|---|---|---|
| | | Mixtures K =3 | | | Mixtures K =5 | | |
| | | - | c=25% | c=50% | - | c=25% | c=50% |
| Product-1 | 33.33 | 34.23 (0.16) | 34.27 (0.57) | 42.51 (2.91) | **34.16** (0.15) | 34.31 (0.62) | 35.09 (1.03) |
| Product-2 | 50 | **49.33** (1.42) | 50.67 (1.76) | 59.47 (2.83) | 49.29 (1.41) | 50.85 (2.21) | 51.45 (2.45) |
| Product-3 | 66.67 | 63.81 (1.66) | **65.87** (1.64) | 59.90 (6.05) | 63.98 (1.78) | 65.69 (1.43) | 65.26 (2.60) |
| Bundle- 1,2 | 83.33 | 83.56 (1.54) | 83.57 (1.01) | 83.14 (0.62) | 83.46 (1.32) | **83.42** (1.35) | 83.49 (1.63) |
| Bundle-1,3 | 100 | 98.04 (1.72) | 98.05 (1.48) | 96.28 (1.53) | **98.15** (1.79) | 98.08 (1.71) | 97.91 (1.57) |
| Bundle-2,3 | 116.67 | 113.14 (2.65) | 113.32 (2.27) | 112.94 (1.80) | 113.28 (2.42) | 113.23 (2.17) | **113.56** (2.34) |
| Bundle-1,2,3 | 150 | 147.37 (2.74) | **149.70** (2.46) | 155.54 (1.67) | 147.44 (2.37) | 149.37 (2.58) | 150.50 (3.24) |

Table. 2B

| Bundle type | Squared error | | | | | |
|---|---|---|---|---|---|---|
| | Mixtures K =3 | | | Mixtures K =5 | | |
| | - | c=25% | c=50% | - | c=25% | c=50% |
| Product-1 | 0.8 | 0.88 | 84.18 | **0.69** | 0.95 | 3.07 |
| Product-2 | **0.45** | 0.45 | 89.69 | 0.5 | 0.72 | 2.1 |
| Product-3 | 8.17 | 0.64 | 45.79 | 7.2 | 0.95 | 1.98 |
| Bundle-1,2 | 0.05 | 0.05 | 0.04 | 0.01 | **0.01** | 0.03 |
| Bundle-1,3 | 3.86 | 3.79 | 13.8 | 3.44 | 3.7 | 4.35 |
| Bundle-2,3 | 12.45 | 11.21 | 13.87 | 11.5 | 11.79 | **9.64** |
| Bundle-1,2,3 | 6.94 | 0.09 | 30.73 | 6.56 | 0.39 | 0.25 |
| Average squared error | 4.67 | **2.44** | 39.73 | 4.27 | 2.65 | 3.06 |

Tables. 3A and 3B depict the estimated revenue optimal price and the squared error between true and the estimated revenue optimal price.

Table. 3A

| Bundle type | True price | Estimated revenue optimal price | | | | | |
| | | Mixtures K =3 | | | Mixtures *K* =5 | | |
| | | - | *c*=25% | *c*=50% | | *c*=25% | *c*=50% |
| Product-1 | 33.33 | 35.63 (0.29) | 34.66 (1.31) | 53.50 (8.68) | 36.84 (0.53) | 36.44 (1.69) | **34.09** (2.88) |
| Product-2 | 50 | 49.73 (1.02) | 51.07 (1.49) | 61.82 (3.89) | **50.22** (1.20) | 52.02 (2.17) | 53.54 (1.87) |
| Product-3 | 66.67 | **64.68** (1.08) | 64.66 (4.88) | 43.93 (14.35) | 58.98 (2.86) | 60.21 (1.76) | 60.46 (4.17) |
| Bundle-1,2 | 67.34 | 67.70 (1.00) | **67.56** (0.61) | 71.18 (1.57) | 68.33 (0.93) | 68.23 (0.75) | 67.88 (1.01) |
| Bundle-1,3 | 80.79 | **79.71** (1.07) | 79.57 (2.71) | 77.39 (2.01) | 77.55 (1.87) | 77.04 (1.81) | 76.51 (2.90) |
| Bundle-2,3 | 94.33 | **90.36** (1.58) | 90.06 (2.38) | 85.53 (3.97) | 89.10 (1.84) | 89.68 (1.47) | 89.97 (1.68) |
| Bundle-1,2,3 | 113.16 | 110.42 (1.87) | 111.15 (2.38) | 117.57 (1.98) | 109.79 (1.81) | 110.84 (1.71) | **111.62** (2.89) |

Table. 3B

| Bundle type | Squared error | | | | | |
| | Mixtures K =3 | | | Mixtures *K* =5 | | |
| | - | *c*=25% | *c*=50% | - | *c*=25% | *c*=50% |
| Product-1 | 5.27 | 1.77 | 406.83 | 12.27 | 9.68 | **0.57** |
| Product-2 | 0.07 | 1.15 | 139.81 | **0.05** | 4.07 | 12.54 |
| Product-3 | **3.95** | 4.02 | 517.05 | 59.13 | 41.74 | 38.53 |
| Bundle-1,2 | 0.13 | **0.04** | 14.69 | 0.97 | 0.78 | 0.28 |
| Bundle-1,3 | **1.17** | 1.49 | 11.56 | 10.49 | 14.09 | 18.37 |
| Bundle-2,3 | **15.74** | 18.17 | 77.37 | 27.27 | 21.61 | 18.96 |
| Bundle-1,2,3 | 7.52 | 4.04 | 19.42 | 11.33 | 5.37 | **2.37** |
| Average squared error | 4.84 | **4.38** | 169.53 | 17.36 | 13.91 | 13.09 |

Tables. 4A and 4B depict the estimated revenues at the estimated optimal prices and the percentage error between true and the estimated revenues.

Table. 4A

| Bundle type | True revenue | Estimated revenue optimal price | | | | | |
| | | Mixtures K =3 | | | Mixtures *K* =5 | | |
| | | - | *c*=25% | *c*=50% | - | *c*=25% | *c*=50% |
| Product-1 | 12.26 | 12.23 (0.01) | **12.24** (0.02) | 10.61 (0.81) | 12.20 (0.02) | 12.20 (0.04) | 12.22 (0.04) |
| Product-2 | 18.39 | **18.39** (0) | 18.38 (0.01) | 17.92 (0.25) | 18.39 (0) | 18.36 (0.03) | 18.34 (0.06) |
| Product-3 | 24.53 | **24.51** (0.02) | 24.44 (0.17) | 21.83 (1.31) | 24.32 (0.16) | 24.39 (0.07) | 24.35 (0.18) |
| Bundle-1,2 | 34.68 | 34.67 (0) | 34.67 (0) | 34.59 (0.05) | **34.67** (0.01) | 34.67 (0) | 34.67 (0.01) |
| Bundle-1,3 | 40.94 | **40.93** (0.01) | 40.90 (0.06) | 40.87 (0.05) | 40.88 (0.06) | 40.86 (0.06) | 40.82 (0.13) |

(continued)

| Bundle type | True revenue | Estimated revenue optimal price | | | | | |
|---|---|---|---|---|---|---|---|
| | | Mixtures K =3 | | | Mixtures $K$ =5 | | |
| | | - | $c$=25% | $c$=50% | - | $c$=25% | $c$=50% |
| Bundle-2,3 | 48.77 | **48.70** (0.06) | 48.67 (0.10) | 48.39 (0.25) | 48.65 (0.08) | 48.68 (0.06) | 48.68 (0.06) |
| Bundle-1,2,3 | 67.47 | 67.42 (0.05) | 67.42 (0.07) | 67.37 (0.07) | 67.40 (0.06) | **67.43** (0.04) | 67.42 (0.04) |

Table. 4B

| Bundle type | Percent Error | | | | | |
|---|---|---|---|---|---|---|
| | Mixtures K =3 | | | Mixtures $K$ =5 | | |
| | - | $c$=25% | $c$=50% | - | $c$=25% | $c$=50% |
| Product-1 | 0.23 | **0.15** | 13.51 | 0.53 | 0.52 | 0.38 |
| Product-2 | **0.02** | 0.07 | 2.58 | 0.03 | 0.17 | 0.3 |
| Product-3 | **0.06** | 0.35 | 11 | 0.84 | 0.54 | 0.7 |
| Bundle-1,2 | 0.02 | **0.01** | 0.25 | 0.03 | 0.02 | 0.02 |
| Bundle-1,3 | **0.02** | 0.09 | 0.16 | 0.15 | 0.18 | 0.28 |
| Bundle-2,3 | **0.14** | 0.19 | 0.77 | 0.25 | 0.19 | 0.17 |
| Bundle-1,2,3 | 0.07 | 0.06 | 0.15 | 0.1 | **0.05** | 0.07 |
| Average percent error | **0.08** | 0.13 | 4.06 | 0.27 | 0.24 | 0.27 |

Tables. 5A and 5B depict percentage gain in computational time with pruning for c = 25% and 50%.

Table. 5A

| Operation type | Time taken (minutes) | | | | | |
|---|---|---|---|---|---|---|
| | Mixtures $K$ =3 | | | Mixtures $K$ =5 | | |
| | - | $c$=25% | $c$=50% | - | $c$=25% | $c$=50% |
| Training | 34.56 (4.67) | 29.86 (0.63) | 23.97 (0.43) | 98.09 (2.46) | 84.59 (0.28) | 66.96 (4.18) |
| Inference | 2.60 (0.29) | 2.0 (0.17) | 1.63 (0.39) | 8.10 (0.40) | 5.55 (0.23) | 4.34 (0.31) |
| Total | 37.16 (4.77) | 31.87 (0.58) | 25.60 (0.33) | 106.18 (2.20) | 90.14 (0.39) | 71.30 (4.38) |

Table. 5B

| Operation type | Percent gain in computational time (%) | | | |
|---|---|---|---|---|
| | Mixtures $K$ =3 | | Mixtures $K$ =5 | |
| | $c$=25% | $c$=50% | $c$=25% | $c$=50% |
| Training | 13.58 | 30.63 | 13.76 | 31.73 |
| Inference | 23.04 | 37.37 | 31.46 | 46.4 |
| Total | 14.24 | 31.1 | 15.11 | 32.85 |

Tables. 6A and 6B depict the number of components in the mixture before and after pruning. Here, $K^N$, $\hat{K}$ denotes total components in the mixture before and after pruning, respectively and $K^N - \hat{K}$ represents discarded components.

Table. 6A

| Bundle | Mixtures K =3 | | | | |
|---|---|---|---|---|---|
| | | c =25% | | c =50% | |
| | $K^N$ | $\hat{K}$ | $K^N - \hat{K}$ | $\hat{K}$ | $K^N - \hat{K}$ |
| Bundle-1,2 | 9 | 7 | 2 | 5 | 4 |
| Bundle-1,3 | 9 | 7 | 2 | 5 | 4 |
| Bundle-2,3 | 9 | 7 | 2 | 5 | 4 |
| Bundle-1,2,3 | 27 | 21 | 6 | 14 | 13 |

Table. 6B

| Bundle | Mixtures K =5 | | | | |
|---|---|---|---|---|---|
| | | c =25% | | c =50% | |
| | $K^N$ | $\hat{K}$ | $K^N - \hat{K}$ | $\hat{K}$ | $K^N - \hat{K}$ |
| Bundle-1,2 | 25 | 19 | 6 | 13 | 12 |
| Bundle-1,3 | 25 | 19 | 6 | 13 | 12 |
| Bundle-2,3 | 25 | 19 | 6 | 13 | 12 |
| Bundle-1,2,3 | 125 | 94 | 31 | 63 | 62 |

Table. 1 shows performance of the GMDN model along with precision and recall metrics. Observations from the results are explained here in terms of classification, WTP distributions, revenue optimal price, revenue, generalizability, mixture components pruning, and time complexity analysis.

**Classification:** The classification metrics observed are close to one as shown in Table 1. This explains that the disclosed GMDN model is performing very well at the binary classification task of predicting buy and no-buy decision given the bundle composition and the offered price.

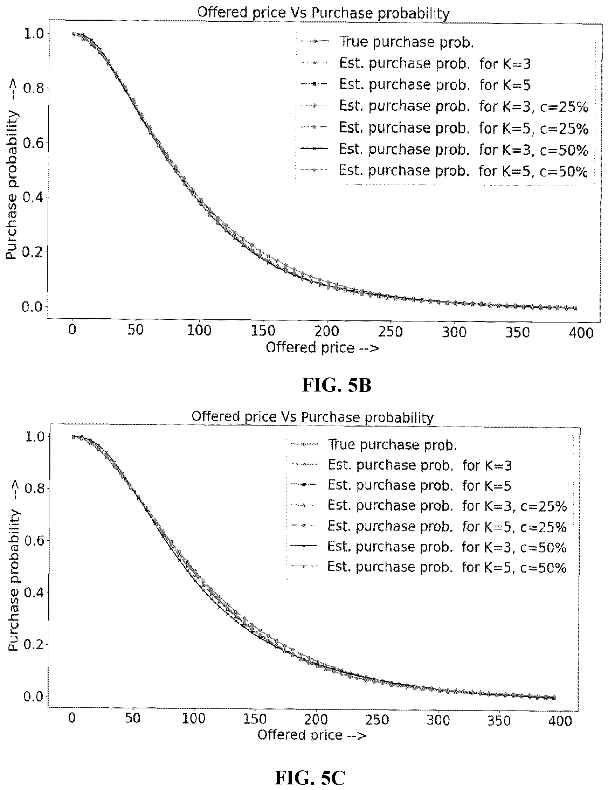

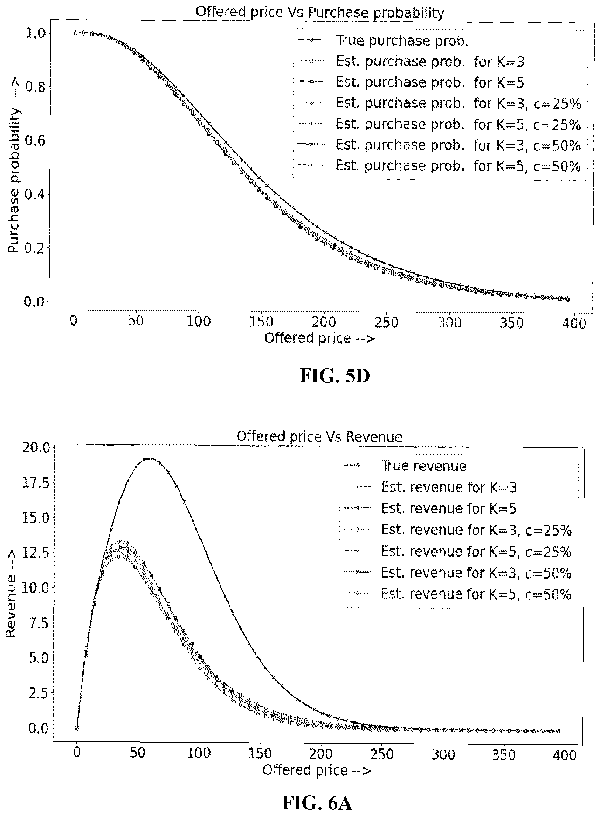

**WTP distributions:** The average squared error between the true and the estimated means of the WTP distributions across the products and the bundles is small and close to zero as depicted in the Tables. 2A and 2B. In addition to that, the estimated purchase probabilities plotted in FIGS. 4A, 4B, 4C, 5A, 5B, 5C and 5D are also close to the true purchase probabilities. This tells that the disclosed GMDN model is estimating the underlying true WTP distributions very well.

**Revenue optimal price:** The average squared error between the true and the estimated revenue optimal prices across the possible bundles is close to zero as depicted in Tables. 3A and 3B. This states that the disclosed GMDN model is excelling in estimating the revenue optimal price.

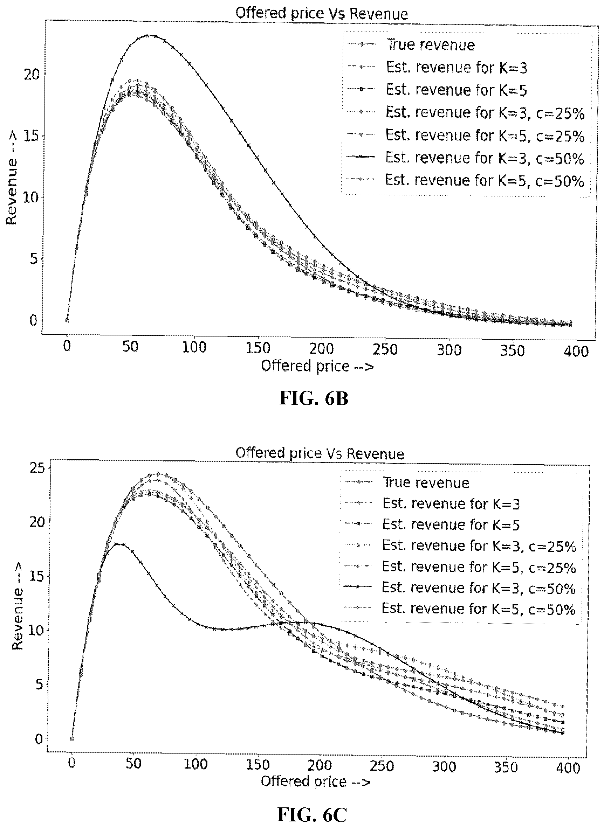

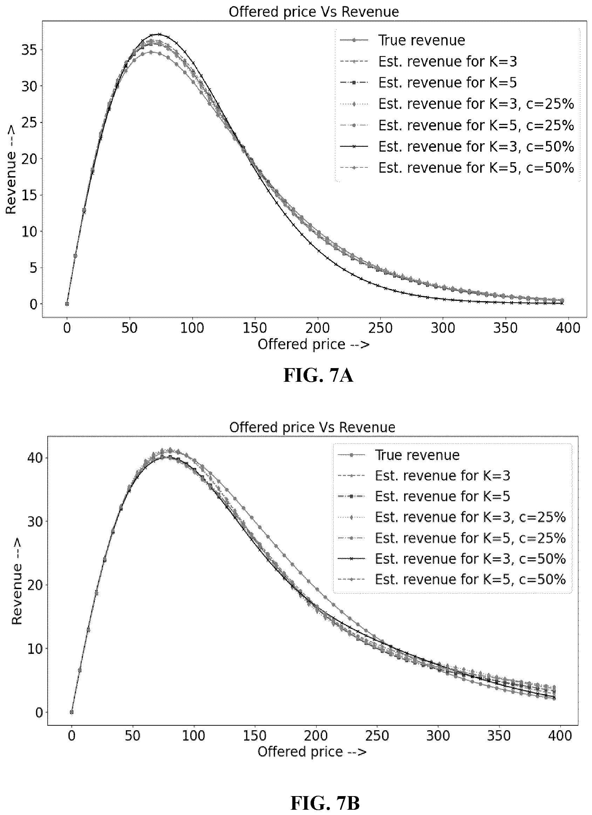

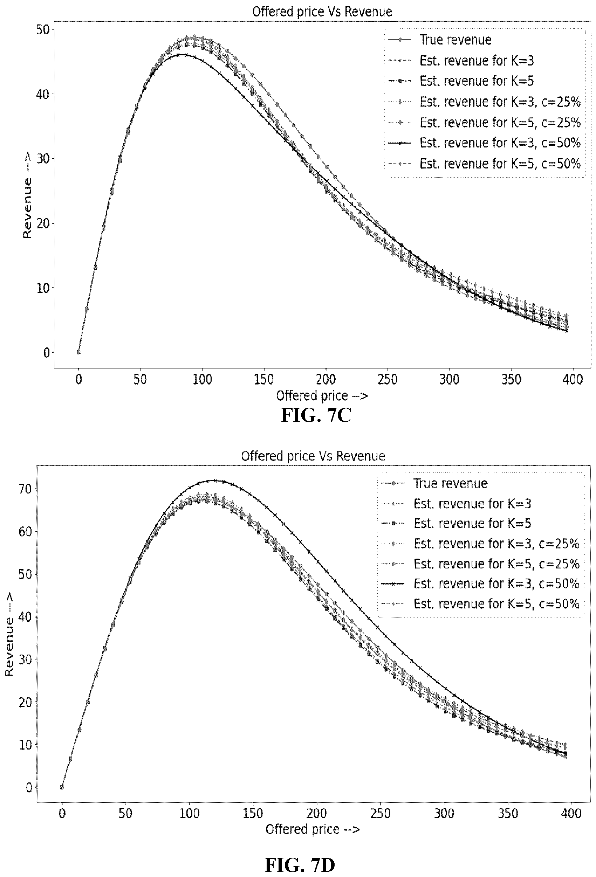

**Revenue:** The average percentage error between the true and the estimated revenues at the revenue optimal prices across the products and the bundles is close to zero as laid out in Tables. 4A and 4B. Also, the estimated revenue curves are close to true revenue curves as depicted in FIGS. 6A, 6B, 6C, 7A, 7B, 7C, and 7D. This reveals that the disclosed GMDN model is very good in estimating the optimal revenue.

**Generalizability:** The GMDN model learned to estimate the WTP distributions, the revenue optimal prices and the revenues of the products and the bundles very well, even though the model is trained on the sales data from three bundles composed of any two of the three products. This shows the efficacy and generalization capacity of the disclosed GMDN model.

**Mixture components pruning:** The details on the components with and without pruning are presented in Tables. 6A, and 6B for mixtures $K = 3$ and $K = 5$. Pruning 25% and 50% of the mixture components is not hurting the model's classification performance as shown in Table. 1. This says that all the components in the mixture are not very important, and it is safe to discard insignificant components.

The average squared error in estimating the mean of the WTP distributions and revenue-optimal prices is lower than the no pruning model as shown in Tables. 2A, 2B, 3A, and 3B. This shows that pruning is acting as a regularizer and helping in estimating the mean of the WTP distributions and the revenue optimal price better. The average error in estimated means of the WTP distributions and revenue-optimal prices is high when K = 3 and c = 50% in Tables. 2A, 2B, 3A, and 3B than its counterparts. This reveals that pruning a lot of components might hurt the model's performance and the model should have enough components to approximate the underlying the WTP distributions better.

**Time complexity analysis:** The gain in computational time with pruning is presented in Tables. 5A and 5B. The percent gain in the computational time with respect to no pruning model is very high. This shows that pruning reduces the computational time significantly and careful pruning of mixture components is helping the GMDN model to do well.

**Effect of price points of the offered price**

The dataset used in the experiments reported above had 300 price points of the offered price per bundle. However, experimenting with too many price points of the offered price is costly in real world applications. To study the effect of the reduced price points of the offered price, 15 and 30 price points of the offered price per bundle are considered to mimic real world price experimentation scenario and the sample size of 50 per price point per bundle is considered. Thus, the total samples for the three bundles considered are 2250 and 4500 for 15 and 30 price points of the offered price respectively. Results illustrating the effect of the number of price points of the offered price and the sample size are tabulated in Tables. 7, 8A, 8B, 9A, 9B, 10A, and 10B.

Table. 7 depicts the effect of the price points of the offered price and the sample size on the performance of the GMDN model.

Table. 7

| Mixtures $K$ | Price points | Sample size | Accuracy | F1-score | AUROC |
|---|---|---|---|---|---|
| 3 | 15 | 2250 | 0.6871 (0.0009) | 0.6864 (0.0010) | 0.7973 (0.0014) |
| | 30 | 4500 | 0.7660 (0.0030) | 0.7668 (0.0030) | 0.8489 (0.0004) |
| | 300 | 18000 | 0.8701 (0.0014) | 0.8663 (0.0007) | 0.9142 (0.0001) |
| 5 | 15 | 2250 | 0.6871 (0.0009) | 0.6864 (0.0010) | 0.7979 (0.0010) |
| | 30 | 4500 | 0.7660 (0.0030) | 0.7668 (0.0030) | 0.8489 (0.0004) |
| | 300 | 18000 | 0.8705 (0.0013) | 0.8664 (0.0007) | 0.9143 (0.0001) |

Tables. 8A and 8B depict the effect of the price points of the offered price and the sample size on the accuracy of the estimated means of the WTP distributions.

Table. 8A

| Bundle type | True mean | Estimated mean of the WTP dist. | | | | | |
|---|---|---|---|---|---|---|---|
| | | Mixtures $K$=3 | | | Mixtures $K$=5 | | |
| | | 15 | 30 | 300 | 15 | 30 | 300 |
| | | 2250 | 4500 | 18000 | 2250 | 4500 | 18000 |
| Product-1 | 33.33 | 41.48 (5.71) | 30.66 (0.51) | 34.23 (0.16) | 42.71 (4.33) | 30.82 (0.57) | **34.16** (0.15) |
| Product-2 | 50 | **49.90** (1.58) | 46.86 (1.13) | 49.33 (1.42) | 48.97 (1.74) | 46.79 (1.11) | 49.29 (1.41) |
| Product-3 | 66.67 | 61.27 (3.15) | 69.16 (2.28) | 63.81 (1.66) | 60.34 (2.49) | **69.00** (2.23) | 63.98 (1.78) |
| Bundle-1,2 | 83.33 | 91.38 (4.68) | 77.52 (1.08) | 83.56 (1.54) | 91.68 (4.12) | 77.60 (110) | 83.46 (1.32) |
| Bundle-1,3 | 100 | 102.76 (3.72) | **99.83** (2.30) | 98.04 (1.72) | 103.06 (3.73) | 99.82 (2.29) | 98.15 (1.79) |
| Bundle-2,3 | 116.67 | 111.17 (3.87) | **116.02** (2.09) | 113.14 (2.65) | 109.31 (2.41) | 115.79 (2.01) | 113.28 (2.42) |
| Bundle-1,2,3 | 150 | 152.65 (2.38) | 146.68 (2.02) | 147.37 (2.74) | **152.02** (2.95) | 146.61 (2.00) | 147.44 (2.37) |

Table. 8B

| Bundle type | Squared error | | | | | |
|---|---|---|---|---|---|---|
| | Mixtures K=3 | | | Mixtures K=5 | | |
| | 15 | 30 | 300 | 15 | 30 | 300 |
| | 2250 | 4500 | 18000 | 2250 | 4500 | 18000 |
| Product-1 | 66.41 | 7.12 | 0.8 | 88 | 6.33 | 0.69 |
| Product-2 | **0.01** | 9.89 | 0.45 | 1.07 | 10.33 | 0.5 |
| Product-3 | 29.09 | 6.22 | 8.17 | 40 | **5.46** | 7.2 |
| Bundle-1,2 | 64.73 | 33.8 | 0.05 | 69.66 | 32.85 | **0.01** |
| Bundle-1,3 | 7.59 | **0.03** | 3.86 | 9.34 | 0.03 | 3.44 |
| Bundle-2,3 | 30.21 | **0.42** | 12.45 | 54.17 | 0.77 | 11.5 |
| Bundle-1,2,3 | 7.03 | 11.02 | 6.94 | **4.08** | 11.53 | 6.56 |
| Average squared error | 29.3 | 9.79 | 4.67 | 38.05 | 9.62 | **4.27** |

Tables. 9A and 9B depict the effect of the price points of the offered price and the sample size on the accuracy of the estimated revenues at the estimated optimal prices.

Table. 9A

| Bundle type | True revenue | Estimated revenue at optimal price | | | | | |
|---|---|---|---|---|---|---|---|
| | | Mixtures K=3 | | | Mixtures K=5 | | |
| | | 15 | 30 | 300 | 15 | 30 | 300 |
| | | 2250 | 4500 | 18000 | 2250 | 4500 | 18000 |
| Product-1 | 12.26 | 12.15 (0.10) | 12.05 (0.04) | 12.23 (0.01) | 10.02 (4.36) | 12.06 (0.06) | **12.20** (0.02) |
| Product-2 | 18.39 | 17.45 (0.38) | 17.22 (0.41) | **18.39** (0) | 17.46 (0.36) | 17.22 (0.43) | 18.39 (0) |
| Product-3 | 24.53 | 21.62 (1.48) | 24.51 (0.01) | 24.51 (0.02) | 21.99 (0.90) | **24.52** (0.01) | 24.32 (0.16) |
| Bundle-1,2 | 34.68 | 32.72 (0.75) | 34.23 (0.37) | **34.67** (0) | 32.69 (0.53) | 34.22 (0.39) | 34.67 (0.01) |
| Bundle-1,3 | 40.94 | 39.23 (1.63) | 40.89 (0.04) | **40.93** (0.01) | 39.65 (1.17) | 40.88 (0.04) | 40.88 (0.06) |
| Bundle-2,3 | 48.77 | 48.12 (0.50) | **48.74** (0.02) | 48.70 (0.06) | 48.42 (0.22) | 48.74 (0.02) | 48.65 (0.08) |
| Bundle-1,2,3 | 67.47 | 66.68 (0.10) | **67.44** (0.01) | 67.42 (0.05) | 66.81 (0.11) | 67.44 (0.01) | 67.40 (0.06) |

Table. 9B

| Bundle type | Percent Error | | | | | |
|---|---|---|---|---|---|---|
| | Mixtures K=3 | | | Mixtures K=5 | | |
| | 15 | 30 | 300 | 15 | 30 | 300 |
| | 2250 | 4500 | 18000 | 2250 | 4500 | 18000 |
| Product-1 | 0.89 | 1.76 | 0.23 | 18.32 | 1.65 | 0.53 |
| Product-2 | 5.14 | 6.37 | 0.02 | 5.07 | 6.38 | 0.03 |
| Product-3 | 11.83 | 0.04 | 0.06 | 10.33 | **0.04** | 0.84 |
| Bundle-1,2 | 5.65 | 1.28 | 0.02 | 5.72 | 1.32 | 0.03 |
| Bundle-1,3 | 4.18 | 0.11 | 0.02 | 3.15 | 0.13 | 0.15 |
| Bundle-2,3 | 1.32 | **0.06** | 0.14 | 0.72 | 0.06 | 0.25 |
| Bundle-1,2,3 | 1.17 | **0.04** | 0.07 | 0.98 | 0.04 | 0.1 |

(continued)

| Bundle type | Percent Error | | | | | |
|---|---|---|---|---|---|---|
| | Mixtures $K=3$ | | | Mixtures $K=5$ | | |
| | 15 | 30 | 300 | 15 | 30 | 300 |
| | 2250 | 4500 | 18000 | 2250 | 4500 | 18000 |
| Average squared error | 4.31 | 1.38 | **0.08** | 6.33 | 1.37 | 0.27 |

Tables. 10A and 10B depict the effect of the price points of the offered price and sample size on the accuracy of the estimated revenue-optimal prices.

Table. 10A

| Bundle type | True price | Estimated revenue optimal price | | | | | |
|---|---|---|---|---|---|---|---|
| | | Mixtures K =3 | | | Mixtures K =5 | | |
| | | 15 | 30 | 300 | 15 | 30 | 300 |
| | | 2250 | 4500 | 18000 | 2250 | 4500 | 18000 |
| Product-1 | 33.33 | 30.70 (3.28) | 27.47 (0.48) | 35.63 (0.29) | 56.45 (52.02) | 27.70 (0.93) | 36.84 (0.53) |
| Product-2 | 50 | 67.74 (4.11) | 70.13 (4.24) | 49.73 (1.02) | 67.65 (3.82) | 70.12 (4.42) | 50.22 (1.20) |
| Product-3 | 66.67 | 84.89 (34.20) | 65.07 (1.13) | 64.68 (1.08) | 81.53 (31.22) | 65.26 (1.06) | 58.98 (2.86) |
| Bundle-1,2 | 67.34 | 88.39 (5.32) | 76.01 (4.65) | 67.70 (1.00) | 88.85 (3.39) | 76.07 (4.87) | 68.33 (0.93) |
| Bundle-1,3 | 80.79 | 77.91 (22.05) | 83.96 (1.34) | 79.71 (1.07) | 78.23 (18.53) | 84.14 (1.38) | 77.55 (1.87) |
| Bundle-2,3 | 94.33 | 107.06 (5.53) | 96.61 (1.69) | 90.36 (1.58) | 103.85 (3.16) | 96.58 (1.57) | 89.10 (1.84) |
| Bundle-1,2,3 | 113.16 | 127.03 (0.93) | 114.95 (1.50) | 110.42 (1.87) | 125.80 (119) | 115.02 (1.49) | 109.79 (1.81) |

Table. 10B

| Bundle type | Squared error | | | | | |
|---|---|---|---|---|---|---|
| | Mixtures K =3 | | | Mixtures K =5 | | |
| | 15 | 30 | 300 | 15 | 30 | 300 |
| | 2250 | 4500 | 18000 | 2250 | 4500 | 18000 |
| Product-1 | 6.96 | 34.43 | 5.27 | 534.49 | 31.78 | 12.27 |
| Product-2 | 314.74 | 405.16 | 0.07 | 311.40 | 404.92 | 0.05 |
| Product-3 | 331.97 | 2.54 | 3.95 | 220.85 | 1.97 | 59.13 |
| Bundle-1,2 | 442.78 | 75.08 | 0.13 | 462.42 | 76.18 | 0.97 |
| Bundle-1,3 | 8.28 | 10.02 | 1.17 | 6.59 | 11.24 | 10.49 |
| Bundle-2,3 | 162.11 | 5.21 | 15.74 | 90.68 | 5.1 | 27.27 |
| Bundle-1,2,3 | 192.50 | 3.19 | 7.52 | 159.82 | 3.45 | 11.33 |

The classification performance of the disclosed GMDN model gradually increases with increasing number of the price points of the offered price per bundle and samples as shown in Table 7. This depicts that, as expected, learning improves with more data.

The average squared error of the estimated means of the WTP distributions, the revenue optimal prices and the average percent error in estimated revenues decrease with increasing the price points of the offered price and the sample size as reported in Tables. 8A, 8B, 9A, 9B, 10 A, and 10B. This highlights that price experimentation improves learning.

The performance of the disclosed GMDN model is demonstrated in terms of the standard classification metrics, error in estimated WTP distributions, revenue optimal prices and revenues, on a simulated bundled sales data. The pruning approach tackles the exponential growth of mixture components and its usefulness for improving computational time and other performance metrics are shown. The effect of the price points of the offered price per bundle and sample size on the performance of the disclosed GMDN model is shown.

The written description describes the subject matter herein to enable any person skilled in the art to make and use the embodiments. The scope of the subject matter embodiments is defined herein and may include other modifications that occur to those skilled in the art. Such other modifications are intended to be within the scope of the present disclosure if they have similar elements that do not differ from the literal language of the present disclosure or if they include equivalent elements with insubstantial differences from the literal language of the embodiments described herein.

The embodiments of the present disclosure herein address estimating WTP distributions from bundled and unbundled sales data using GMDN model. The input samples are passed through the GMDN model to learn the plurality gamma mixture parameters. The learnt gamma mixture parameters are then used to evaluate the weighted CDF value at the offered price of the bundle and the bundle composition. The weighted CDF value is then used to predict the customer's choice based on the predefined threshold and estimates the revenue optimal price of the bundle composition. The disclosed GMDN model models the WTP distributions as the mixture of gamma distributions and learns the WTP distributions from the bundled and the unbundled sales data very well. The disclosed GMDN model predicts the customer's choice of buy or no-buy decision for the given sample of the bundle or the product with greater accuracy and excels in estimating the revenue optimal prices and the revenues of the products and the bundles.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method (300), the method comprising:

receiving (302), via one or more hardware processors, a historical sales dataset comprising a plurality of input samples pertaining to a bundle, wherein the bundle comprises one or more products; and
training (304), via the one or more hardware processors, a Gamma Mixture Density Network (GMDN) model with each of the plurality of input samples in the historical sales data set by:

feeding (304a) a feature vector of each of the one or more products of the bundle in the input sample, to a corresponding feed forward layer of the GMDN model to generate an intermediate representation for each of the one or more products;
passing (304b) the intermediate representation of each of the one or more products to a subsequent GMDN layer of the GMDN model, to learn a gamma mixture comprising a plurality of gamma mixture parameters for each of the one or more products;
obtaining (304c) a willingness-to-pay (WTP) distribution corresponding to each of the product of the one or more products from the obtained gamma mixture of the corresponding product;
estimating (304d) a bundle WTP distribution composed of the one or more products by convolving WTP distributions of the one or more products based on a bundle composition;
calculating (304e) a weighted Cumulative Density Function (CDF) value, using (i) the bundle WTP distribution, and (ii) an offered price of the bundle composition;
predicting (304f) a class score of the bundle composition using the weighted CDF value;
computing (304g) a loss function using the predicted class score and an annotated binary customer's choice; and
updating (304h) the GMDN model based on the computed loss function to generate a trained GMDN model.

2. The processor implemented method of claim 1, wherein the trained GMDN model, during inferencing stage, predicts binary customer's choice based on a predefined threshold, and estimates a revenue optimal price of the bundle composition.

3. The processor implemented method of claim 1, wherein the plurality of input samples comprises a plurality of bundled samples, and a plurality of unbundled samples, and wherein each of the plurality of bundled samples are composed of two or more products, and the plurality of unbundled samples corresponds to a single product, wherein each of the plurality of input samples comprises (i) the bundle composition, (ii) the feature vectors of the bundle, (iii) the offered price of the bundle composition, and (iv) the annotated binary customer's choice corresponding to the bundled composition, and wherein the bundle composition is a binary vector representing the one or more products offered in the bundle.

4. The processor implemented method of claim 2, wherein the revenue optimal price of the bundle composition is estimated using the predicted class score.

5. The processor implemented method of claim 1, wherein a value of the annotated binary customer's choice is classified to one of (i) a buy decision representing successful offer accepted by a customer, and (ii) a no-buy decision representing an unsuccessful offer not accepted by the customer.

6. A system (100), comprising:

a memory (102) storing instructions;
one or more communication interfaces (106); and
one or more hardware processors (104) coupled to the memory (102) via the one or more communication interfaces (106), wherein the one or more hardware processors (104) are configured by the instructions to:

receive a historical sales dataset comprising a plurality of input samples pertaining to a bundle, wherein the bundle comprises one or more products; and

train a Gamma Mixture Density Network (GMDN) model with each of the plurality of input samples in the historical sales data set by:

feed a feature vector of each of the one or more products of the bundle in the input sample, to a corresponding feed forward layer of the GMDN model to generate an intermediate representation for each of the one or more products;

pass the intermediate representation of each of the one or more products to a subsequent GMDN layer of the GMDN model, to learn a gamma mixture comprising a plurality of gamma mixture parameters for each of the one or more products;

obtain a willingness-to-pay (WTP) distribution corresponding to each of the product of the one or more products from the obtained gamma mixture of the corresponding product;

estimate a bundle WTP distribution composed of the one or more products by convolving WTP distributions of the one or more products based on a bundle composition;

calculate a weighted Cumulative Density Function (CDF) value, using (i) the bundle WTP distribution, and (ii) an offered price of the bundle composition;

predict a class score of the bundle composition using the weighted CDF value;

compute a loss function using the predicted class score and an annotated binary customer's choice; and

update the GMDN model based on the computed loss function to generate a trained GMDN model.

7. The system of claim 6, wherein the trained GMDN model, during inferencing stage, predicts binary customer's choice based on a predefined threshold, and estimates a revenue optimal price of the bundle composition.

8. The system of claim 6, wherein the plurality of input samples comprises a plurality of bundled samples, and a plurality of unbundled samples, and wherein each of the plurality of bundled samples are composed of two or more products, and the plurality of unbundled samples corresponds to a single product, wherein each of the plurality of input samples comprises (i) the bundle composition, (ii) the feature vectors of the bundle, (iii) the offered price of the bundle composition, and (iv) the annotated binary customer's choice corresponding to the bundled composition, and wherein the bundle composition is a binary vector representing the one or more products offered in the bundle.

9. The system of claim 7, wherein the revenue optimal price of the bundle composition is estimated using the predicted class score.

10. The system of claim 6, wherein a value of the annotated binary customer's choice is classified to one of (i) a buy decision representing successful offer accepted by a customer, and (ii) a no-buy decision representing an unsuccessful offer not accepted by the customer.

11. One or more non-transitory machine-readable information storage mediums comprising one or more instructions which when executed by one or more hardware processors cause:

receiving a historical sales dataset comprising a plurality of input samples pertaining to a bundle, wherein the bundle comprises one or more products; and

training a Gamma Mixture Density Network (GMDN) model with each of the plurality of input samples in the historical sales data set by:

feeding a feature vector of each of the one or more products of the bundle in the input sample, to a corresponding feed forward layer of the GMDN model to generate an intermediate representation for each of the one or more products;

passing the intermediate representation of each of the one or more products to a subsequent GMDN layer of the GMDN model, to learn a gamma mixture comprising a plurality of gamma mixture parameters for each of the one or more products;

obtaining a willingness-to-pay (WTP) distribution corresponding to each of the product of the one or more products from the obtained gamma mixture of the corresponding product;

estimating a bundle WTP distribution composed of the one or more products by convolving WTP distributions of the one or more products based on a bundle composition;

calculating a weighted Cumulative Density Function (CDF) value,
using (i) the bundle WTP distribution, and (ii) an offered price of the bundle composition;

predicting a class score of the bundle composition using the weighted CDF value;
computing a loss function using the predicted class score and an annotated binary customer's choice; and
updating the GMDN model based on the computed loss function to generate a trained GMDN model.

12. The one or more non-transitory machine-readable information storage mediums of claim 11, wherein the trained GMDN model, during inferencing stage, predicts binary customer's choice based on a predefined threshold, and estimates a revenue optimal price of the bundle composition.

13. The one or more non-transitory machine-readable information storage mediums of claim 11, wherein the plurality of input samples comprises a plurality of bundled samples, and a plurality of unbundled samples, and wherein each of the plurality of bundled samples are composed of two or more products, and the plurality of unbundled samples corresponds to a single product, wherein each of the plurality of input samples comprises (i) the bundle composition, (ii) the feature vectors of the bundle, (iii) the offered price of the bundle composition, and (iv) the annotated binary customer's choice corresponding to the bundled composition, and wherein the one or more non-transitory machine-readable information storage mediums of claim 11, and wherein the bundle composition is a binary vector representing the one or more products offered in the bundle.

14. The one or more non-transitory machine-readable information storage mediums of claim 12, wherein the revenue optimal price of the bundle composition is estimated using the predicted class score.

15. The one or more non-transitory machine-readable information storage mediums of claim 11, wherein a value of the annotated binary customer's choice is classified to one of (i) a buy decision representing successful offer accepted by a customer, and (ii) a no-buy decision representing an unsuccessful offer not accepted by the customer.

SYSTEM

100

MEMORY

102

DATABASE

108

HARDWARE

PROCESSOR(S)

104

I/O INTERFACE(S)

106

**FIG. 1**

Input Sample($X_i^{1:d-1}$)

Product-1

FFN LAYER-1

MDN-1 $\downarrow Z_i^1$

Gamma mixture-1

$\alpha^1_{i,1,\ldots,K}$  $\rho^1_{i,1,\ldots,K}$

$WTP_i^1$

$\cdots$

Product-N

FFN LAYER-N

MDN-N $\downarrow Z_i^N$

Gamma mixture-N

$\alpha^N_{i,1\ldots,K}$  $\rho^N_{i,1\ldots,K}$

$WTP_i^N$

Convolution of gamma mixtures

Bundle composition

1-CDF $\longrightarrow$ Buy / No Buy

Offered Price : $d^{th}$ input dimension $X_i^d$

**FIG. 2**

300

receiving a historical sales dataset comprising a plurality of input samples pertaining to a bundle, wherein the bundle comprises one or more products **302**

training, via the one or more hardware processors, a Gamma Mixture Density Network (GMDN) model with each of the plurality of input samples in the historical sales data set by: **304**

feeding a feature vector of each of the one or more products of the bundle in the input sample, to a corresponding feed forward layer of the GMDN model to generate an intermediate representation for each of the one or more products **304a**

passing the intermediate representation of each of the one or more products to a subsequent GMDN layer of the GMDN model, to learn a gamma mixture comprising a plurality of gamma mixture parameters for each of the one or more products **304b**

( A )

**FIG. 3A**

(A)

obtaining a willingness-to-pay (WTP) distribution corresponding to each of the product of the one or more products from the obtained gamma mixture of the corresponding product **304c**

estimating a bundle WTP distribution composed of the one or more products by convolving the WTP distributions of the one or more products based on a bundle composition **304d**

calculating a weighted cumulative Density function (CDF) value, using (i) the bundle WTP distribution, and (ii) an offered price of the bundle composition **304e**

predicting a class score of the bundle composition using the weighted CDF value **304f**

computing loss function using the predicted class score and an annotated binary customer choice **304g**

updating the GMDN model based on the computed loss function to generate a trained GMDN model **304h**

**FIG. 3B**

Offered price Vs Purchase probability

**FIG. 4A**

Offered price Vs Purchase probability

**FIG. 4B**

**FIG. 4C**

**FIG. 5A**

**FIG. 5B**

**FIG. 5C**

**FIG. 5D**

**FIG. 6A**

**FIG. 6B**

**FIG. 6C**

Offered price Vs Revenue

FIG. 7A

Offered price Vs Revenue

FIG. 7B

Offered price Vs Revenue

FIG. 7C

Offered price Vs Revenue

FIG. 7D

Europäisches
Patentamt

European
Patent Office

Office européen
des brevets

## EUROPEAN SEARCH REPORT

**Application Number**

EP 24 21 4131

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/405775 A1 (SIEBEL THOMAS M [US] ET AL) 22 December 2022 (2022-12-22) | 1,2,6,7, 11,12 | INV. G06Q30/0202 |
| Y | * abstract * * paragraph [0004] - paragraph [0065] * * paragraph [0087] - paragraph [0467] * * figures 1-70 * | 3-5, 8-10, 13-15 | G06Q30/0201 G06N3/08 |
| | ----- | | |
| Y | QINGMING LI ET AL: "Probe: Learning Users' Personalized Projection Bias in Intertemporal Bundle Choices", ARXIV.ORG, CORNELL UNIVERSITY LIBRARY, 201 OLIN LIBRARY CORNELL UNIVERSITY ITHACA, NY 14853, 15 August 2023 (2023-08-15), XP091586317, * abstract * * sections I-VII * * figures 1-7 * | 3-5, 8-10, 13-15 | |
| | ----- | | |

TECHNICAL FIELDS
SEARCHED (IPC)

G06N
G06Q

The present search report has been drawn up for all claims

| Place of search | Date of completion of the search | Examiner |
|---|---|---|
| Munich | 30 April 2025 | Körbler, Günther |

EPO FORM 1503 03.82 (P04C01)

## ANNEX TO THE EUROPEAN SEARCH REPORT
## ON EUROPEAN PATENT APPLICATION NO.

EP 24 21 4131

This annex lists the patent family members relating to the patent documents cited in the above-mentioned European search report.
The members are as contained in the European Patent Office EDP file on
The European Patent Office is in no way liable for these particulars which are merely given for the purpose of information.

30-04-2025

| Patent document cited in search report | Publication date | Patent family member(s) | Publication date |
|---|---|---|---|
| US 2022405775 A1 | 22-12-2022 | AU 2022297419 A1 | 12-10-2023 |
| | | CA 3214018 A1 | 29-12-2022 |
| | | EP 4359909 A2 | 01-05-2024 |
| | | US 2022405775 A1 | 22-12-2022 |
| | | WO 2022271686 A2 | 29-12-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202321085800

**Non-patent literature cited in the description**

- **DONALDSON, C** ; **JONES, A. M** ; **MAPP, T. J.** ; **OLSON, J. A.** Limited dependent variables in willingness to pay studies: applications in health care.. *Applied Economics*, 1998, vol. 30 (5), 667-677
- **GALARRAGA, I** ; **GONZ'ALEZ-EGUINO, M.** ; **MARKANDYA, A.** Willingness to pay and price elasticities of demand for energy-efficient appliances: Combining the hedonic approach and demand systems.. *Energy Economics*, 2011, vol. 33, S66-S74
- **HENSHER, D. A** ; **JOHNSON, L. W**. *Applied discrete choice modelling. Routledge*, 2018
- **ADAMS, W. J.** ; **YELLEN, J. L.** Commodity bundling and the burden of monopoly.. *The quarterly journal of economics*, 1976, 475-498
- **BITRAN, G. R** ; **FERRER, J.-C.** On pricing and composition of bundles.. *Production and Operations Management*, 2007, vol. 16 (1), 93-108
- **BISHOP, C. M**. *Mixture density networks*, 1994